# EUROPEAN PATENT SPECIFICATION

(11) **EP 1 230 530 B1**
(45) Date of publication and mention of the grant of the patent: **10.01.2018**
(21) Application number: 00976161.0
(22) Date of filing: 16.11.2000
(51) Int. Cl.: G01K 1/08, G01K 1/16, G01F 1/684, G01D 11/24, G01D 11/30, F24F 11/00

(54) **TELESCOPIC SENSOR ASSEMBLY**
FÜHLER MIT TELESKOPROHR
ENSEMBLE DE CAPTEUR TELESCOPIQUE

(30) Priority: 16.11.1999 EP 99309103
(43) Date of publication of application: 14.08.2002
(73) Proprietor: SATCHWELL CONTROL SYSTEMS LIMITED, Slough Berkshire SL1 4UH (GB)
(72) Inventor: MATTHEWS, Dene, Slough, Berkshire SL1 4UH (GB)
(74) Representative: Suèr, Steven Johannes
(86) International application number: PCT/GB2000/004375
(87) International publication number: WO 2001/036927

(56) References cited:
- EP-A- 0 272 475
- DD-A- 284 521
- DE-A- 2 534 095
- DE-A- 4 217 389
- US-A- 4 204 431
- US-A- 4 601 589
- US-A- 4 789 246
- US-A- 5 367 282

## Description

Heating and ventilation and similar systems often include a control loop comprising of a sensor to monitor a parameter, for example, the temperature of a heating or cooling fluid or the temperature of humidity of the environment, a corrective element such as a heater, and a control circuit for comparing the detected parameter with a required threshold and controlling the corrective element based on the result of the comparison.

A common sensing method for use in heating and ventilation systems is a thermistor, which is located either directly in an air duct or in a pocket provided in a water tank or pipe. To locate the thermistor within the fluid whose temperature is to be monitored, the sensor is provided on one end of a hollow fixed length rod with electrical connections from the sensor passing through the body of the rod to a terminal block at the opposite end of the rod. For different applications it is necessary to have different length rods to correctly position the sensor element within the process. It is common to have 300mm and 450mm length rods for location of a sensor in an air duct, and 125mm and 200mm length rods which are equivalent to the pocket size in a water system.

In the case of a water monitoring system, the pocket comprises a tube, which is closed at one end. The closed end is placed in the fluid path. The pocket is mechanically attached to the pipe or tank. The open end of the pocket, opens to the outside of the pipe or tank containing the water. In use, the rod including the temperature-sensing element is located in the pocket with the sensor element contacting the closed end. The other end of the rod is mechanically attached to the exposed end of the pocket. Changes in the temperature of the water are transmitted through the end wall of the pocket and cause a corresponding change in the resistance of the thermistor. This resistance can be monitored.

In the case of an air monitoring system the temperature sensing element is located in the air path inside the duct and the sensor assembly is mechanically attached to the duct wall.

In water applications, to ensure that there is a good thermal response to changes in the temperature of the water, it is important that the sensor is pressed against the end of the pocket. A sensor construction is known which provides a spring assembly which supports the temperature sensing element to bias this towards the closed end of the pocket. This is successful in ensuring that the sensor element abuts the end of the pocket where there is a small difference between the length of the pocket and the length of the rod, but it is unable to compensate for larger differences. The provision of a spring bias is also expensive. Therefore it is necessary for the length of the rod to be matched closely to the depth of the tube. Additionally as the probe attachment to the head of the pocket usually varies in arrangements between manufacturers this may not always be easy or reliably overcome in many situations. It is therefore common when fitting a new sensor element to replace the pocket with one designed to match the length of the sensor rod and to the correct mounting feature which locates and secures the sensor in the pocket. This requires that the hydraulic system be drained so that the water at pressure does not leak from the system when the pocket is removed.

Also when the sensor is not positioned in the correct location or is able to move away from the closed end of the pocket due to poor mounting, the determined temperature will not correspond to the temperature which is expected and therefore the process will be incorrectly controlled. Where the sensor should be located at the bottom of a pocket, but, due to the length of the rod is positioned away from the end of the pocket, the reaction time of the sensor will be reduced and therefore the control of the process will lag behind changes in the parameter which is monitored.

With conventional sensors, it is not possible to merely cut the end off the rod to make this of the correct length, since in doing so either the end including the sensor will be removed, or the wires passing through the rod will be cut so that the sensor cannot be connected to the control unit.

Conventional sensors not using a spring to ensure a good contact with the bottom of the pocket usually rely on the use of a heat conductive compound to improve response to temperature change. The paste used is not easily applied to the bottom of the pocket and is usually applied to the sensor tip and inserted with care, hoping that the paste is fully employed. All too often this is not the case and the paste is removed by the pocket wall during insertion.

In practice it is therefore necessary to stock a number of sensors having different length rods for different applications and supply many variant models with sensors and pockets already assembled. This leads to large costs. It is also not unusual for the wrong length sensor device to be supplied for a particular application, and, in many instances, there is no sensor of a length required for a particular application. it is therefore known for installers to provide additional brackets and other supports to mount a sensor having an inappropriate length for a given application.

US-A-4,204,341 discloses a sensor assembly having a telescopic shaft.

JPH112570 A discloses a thermistor-based temperature sensor using heat conductive paste to improve heat conduction to the thermistor.

The sensor assembly of the present invention is defined by claim 1. A method of using the sensor assembly of the present invention in a heating/ventilation system is defined in claim 8.

US 4,601,589 discloses a sensor assembly having the features of the preamble of claim 1.

The mounting of the telescopic sensor assembly to a pocket device is simple and generic to a wide variety of common devices. This additional length of the last section permits a heat conductive paste carrying ferrule to be used. The ferrule is free to move along the axis of the shaft by an amount such as to extend past the sensing element giving a clearance area and creating a well over the top of the sensing element permitting the application of a heat conducting compound.

With the present invention, it is only necessary to stock a single type of sensor assembly, which can be used for all applications rather than stocking sensors of different lengths for different applications. This means that it is not necessary to stock as many sensors and therefore is economically advantageous. As the sensor can be shortened to its minimum length, there is also less packaging required compared to the longer fixed length sensor, and therefore packaging and transportation costs are reduced. Furthermore, due to the adjustable length of the rod, the sensor can be sued with high accuracy in any application. It is therefore not necessary to replace a pocket so that it corresponds to the length of the sensor, and therefore it is not necessary to drain a system down to replace a pocket, when used with such a pocket.

In this case, the fully extended shaft incorporating the thermistor is fully inserted into the pocket. The ferrule containing the heat conducting compound meets with the closed end of the pocket and the insertion force of the shaft pushes the thermistor through the ferrule/heat conducting compound until the thermistor also meets with the closed end of the pocket. The shaft and bead slide through the ferrule. The ferrule remains intact for future use including maintenance.

The sensor assembly may be assembled with the ferrule and heat conducting compound in place prior to future use ready for direct insertion into a pocket.

Any suitable heat conducting compound many be employed and various compounds, including silicone-based compounds, are well known and readily available.

The insertion force collapses the telescopic shaft thus optimising the length to match the specific requirements of the pocket removing any need for cutting or extending wires. Furthermore connection of the sensor to the pocket is simple and will always ensure the optimum performance of the sensor.

The provision of a longer coaxial shaft component to support the sensing element ensures optimum operation of the shaft during insertion or, indeed, during compression of the shaft in general. This ensures that no significant gap can form between adjacent coaxial sections and reduces the likelihood of ingress by corrosive liquid or gas. It also ensures that the head of the sensor engages properly with the end of the pocket in applications in which the sensor is inserted into a pocket. In addition, it enables the employment of a ferrule to ensure appropriate compound application.

The shaft preferably includes at least four sections. This allows the shaft to extend from a minimum length of about 100mm to a maximum length of about 350mm. Advantageously, the shaft may comprise five sections allowing the shaft to extend to a maximum length of 450mm.

The sensor assembly can be used for temperature measurements. Where the sensing element used is a thermistor, then it is advantageous for the thermistor to be covered in heat paste to give good thermal conductivity where the thermistor meets with the closed end of the pocket.

Preferably the sensor has a maximum width allowing it to be provided in most conventional pockets. Typically pockets have an internal diameter of between 6 and 12mm, and accordingly the sensor advantageously has a maximum width of less than 6mm.

An adaptor may be used to permit a common sensor assembly design to be fixed to a range of pre-existing sensor ports in heating/ventilation systems.

An example of the present invention will be described in accordance with the accompanying drawings, in which:
Figure 1 is a side view of a sensor in a system in accordance with the present invention both in an extended un-installed state and installed into a pocket.
Figure 2A and 2B are side cross-sectional views of a sensor in a system according to the present invention in an extended and un-extended state;
Figure 3 is an end view of a sensor shaft with ferrule and heat conducting compound in place.

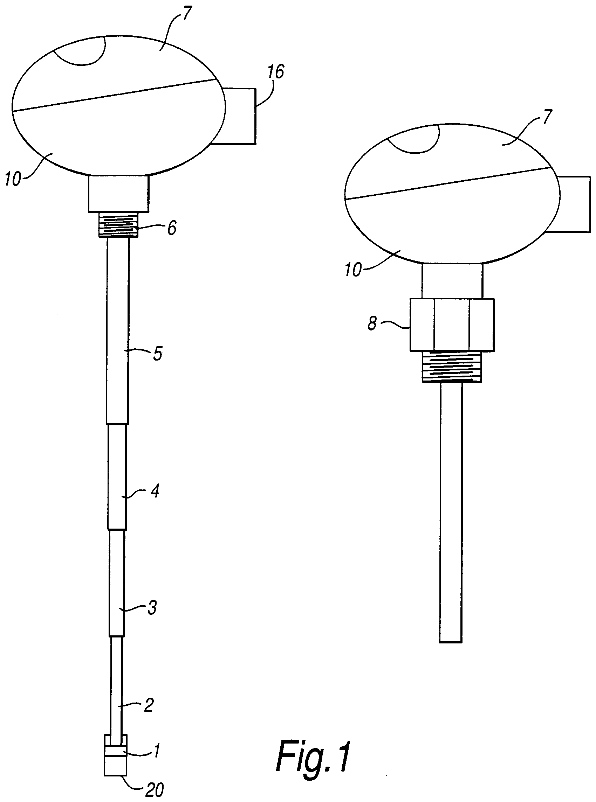

Referring to Figure 1, a pipe (not shown) contains water or other liquid (not shown either) which may be used in a heating or ventilation system. The pipe includes a pocket which comprises a tube of stainless steel or brass having an opening to the outside of the pipe and closed bottom which, in use, is below the level of water in the pipe.

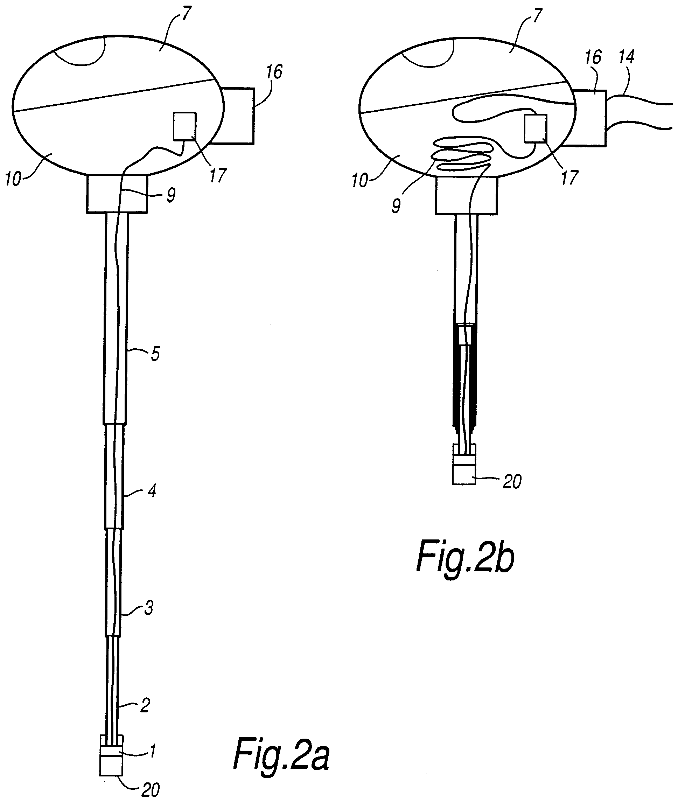

Referring to Figures 2A and 2B, a thermistor 1 is mounted on the end of a telescopic shaft which includes four sections 2, 3, 4, 5. The sections 2, 3, 4, 5 are provided coaxially and are longitudinally slidable with respect to each other. The thermistor 1 is mounted on the longest and thinnest end section 2 which is received in a section 3, received in a further section 4, which in turn is received in the end section 5. Each of the sections are made of stainless steel, however such section could be made of other metal or plastics material, for example aluminium or FORTON (Trade Mark).

The end of the telescopic shaft remote from the thermistor 1 includes a sensor head 10. This includes fixing means 6 for mounting the sensor to the pipe over the opening of the pocket 8 and a rotatable top 7. Wires 9 pass from the thermistor 1 to the sensor head 10 to connect the sensor element or bead, in this embodiment a thermistor 1 to control electronics (not shown) provided in the sensor head 10 for producing an electrical output dependent upon the temperature of the thermistor 1, and for outputting this to a control circuit via the top 7. The top 7 is arranged to be able to rotate independently to the fixing means 6, so that it can be moved to ensure that the electrical connection inlet 16 is in an optimum position for attaching connection wire 14 to an electrical connection block 17 (Figure 2B). The control circuit in turn controls a corrective element, for example a heater (not shown) so that when the thermistor 1 is at a temperature below a predetermined threshold, the heater is operated to increase the temperature of the water passing through the pipe. Alternatively the sensor can be used for monitoring applications. Enough space is provided that the wires 9 can still be accommodated when the shaft is at its minimum length.

In use, the thermistor 1 is covered in a heat conductive paste and the section of the telescopic shaft are slid, either prior to or during insertion into the pocket, with respect to each other so that the distance between the sensor head 5 and the thermistor 1 corresponds to the internal length of the pocket. The conductive paste is transported in a slidable ferrule 20 to ensure minimum paste use and correct deployment. If adjustment is performed prior to insertion the telescopic shaft is then inserted into the pocket so that the thermistor is pressed against the bottom of the pocket. The sensor head is then connected to the open end of the pocket and to the pipe.

The well area of the ferrule may be filled with heat conductive compound during manufacture. The clearance area my be such that a small amount of the very high viscosity compound can be left intact on the surface of the bead yet protected from vibration in transit and fitting. During insertion into the pocket, the ferrule is first to meet with the closed end of the pocket, as more pressure is applied to the sensor shaft, causing the ferrule to be pushed back along the first telescopic member until the sensing element itself pushes through to ensure a perfect contact. The telescopic element continues to collapse until the sensor head can be mechanically connected to the open end of the pocket. The sensor shaft incorporating a means of connection to the pocket, continues to ensure a good thermal contact by pushing down on the bead whilst providing a sound fixing.

Due to the conductive paste surrounding the thermistor 1, the temperature of the water passing through the pipe is conveyed through the closed end of the pocket and the heat paste to the thermistor 1. The resistance of the thermistor 1 is dependent upon the temperature of the water surrounding the closed end of the pocket. The control electronics, which may include a resistive bridge, produces an output which is dependent upon the resistance of the thermistor 1 and hence dependent upon the temperature of the water. A controller then controls the heater depending upon the determined temperature of the water.

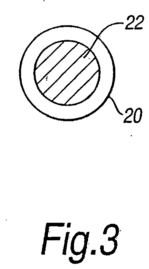

A ferrule 20 is fixed to the end of one of the sensor assemblies of Figure 3 by an epoxy resin so as to surround the sensor 1 at the end of the sensor assembly to provide protection to the sensor during installation in the air duct 15.

Figure 3 shows the end of a telescopic shaft of a sensor assembly according to the present invention with a ferrule 20 in place defining a well in which heat conductive paste 22 is retained.

## Claims

1. A sensor assembly having a sensing element (1) provided on one end of an extendible shaft wherein the extendible shaft is a telescopic shaft comprising a number of coaxial sections (2,3,4,5) which are slidable with respect to each other to vary the length of the shaft; a mounting means (10) provided at the other end of the extendible shaft for mounting the shaft; electrical connections (9) passing from the sensing element (1) along the length of the shaft to the mounting means (10) and fixed thereinto; and **characterized by**:
the length of the section (2) comprising the sensing element (1) being longer than the other slidable sections (3,4,5); and
a ferrule (20) slidably positioned over the end of the shaft, the ferrule (20) holding a viscous heat conducting compound (22) over the end of the shaft, thereby allowing the sensing element covered in heat conducting compound to be pushed through the ferrule and be pressed against an external heat conductive wall.

2. A sensor assembly according to claim 1, wherein the shaft includes at least four sections (2,3,4,5).

3. A sensor assembly as claimed in claim 1 in which the heat conducting compound is a silicone-based compound.

4. A heating/ventilation system including a fluid flow path and a sensor pocket extending into the fluid flow path and including a sensor assembly as claimed in claim 1 the shaft extending into the pocket and the heat conducting compound (22) being in contact with the pocket and the sensing element (1).

5. A heating/ventilation system according to claim 4, wherein the system conveys a liquid and the sensing element (1) is a temperature sensor.

6. A heating/ventilation system according to claim 5, in which the sensor is a thermistor.

7. A heating/ventilation system according to claim 5 or 6, wherein the sensor (1) has a maximum width of less than 6mm.

8. A method of locating a sensing element in a heating/ventilation system having a sensor pocket including the steps of
a) providing a sensor assembly as claimed in any of claims 1 to 3;
b) extending the telescopic shaft so it can reach the end of the pocket;
c) pushing the telescopic shaft into the pocket so that the heat conducting compound is pressed between the sensing element and the bottom of the sensor pocket; and
d) fixing the sensor assembly to the heating/ventilation system to retain it in position relative to the pocket.

## Patentansprüche

1. Fühleraufbau, umfassend
ein Fühlerelement (1), das an einem Ende eines ausziehbaren Rohrs vorgesehen ist, wobei das ausziehbare Rohr ein Teleskoprohr ist, das eine Anzahl von koaxialen Abschnitten (2, 3, 4, 5) umfasst, die zueinander verschiebbar sind, um die Länge des Rohrs zu variieren;
ein Montagemittel (10), das an dem anderen Ende des ausziehbaren Rohrs vorgesehen ist, um das Rohr zu montieren;
elektrische Anschlüsse (9), die vom Fühlerelement (1) entlang der Länge des Rohrs zum Montagemittel (10) laufen und daran befestigt sind;
**dadurch gekennzeichnet, dass**:
die Länge des Abschnitts (2), der das Fühlerelement (1) umfasst, länger ist als die anderen, verschiebbaren Abschnitte (3, 4, 5); und
ein Klemmring (20) gleitbar über dem Ende des Rohrs positioniert ist, wobei der Klemmring (20) eine zähflüssige, wärmeleitende Masse (22) über dem Ende des Rohrs hält und dadurch ermöglicht, dass das mit wärmeleitender Masse bedeckte Fühlerelement durch den Klemmring gestoßen und gegen eine äußere, wärmeleitende Wand gedrückt wird.

2. Fühleraufbau nach Anspruch 1, wobei das Rohr mindestens vier Abschnitte (2, 3, 4, 5) aufweist.

3. Fühleraufbau nach Anspruch 1, wobei die wärmeleitende Masse eine auf Silikon basierte Masse ist.

4. Heiz-/Belüftungssystem, das einen Flüssigkeitsfließweg und eine Fühlertasche aufweist, die sich in den Flüssigkeitsfließweg erstreckt, und einen Fühleraufbau nach Anspruch 1 umfasst, wobei das Rohr sich in die Tasche erstreckt und die wärmeleitende Masse (22) in Kontakt mit der Tasche und dem Fühlerelement (1) steht.

5. Heiz-/Belüftungssystem nach Anspruch 4, wobei das System eine Flüssigkeit befördert und das Fühlerelement (1) ein Temperaturfühler ist.

6. Heiz-/Belüftungssystem nach Anspruch 5, bei dem der Fühler ein Thermistor ist.

7. Heiz-/Belüftungssystem nach Anspruch 5 oder 6, wobei der Fühler (1) eine maximale Breite von weniger als 6 mm hat.

8. Verfahren zum Lokalisieren eines Fühlerelements in einem Heiz-/Belüftungssystem mit einer Fühlertasche, das folgende Schritte umfasst:
a) Bereitstellen eines Fühleraufbaus nach einem der Ansprüche 1 bis 3;
b) Ausziehen des Teleskoprohrs, sodass es das Ende der Tasche erreichen kann;
c) Stoßen des Teleskoprohrs in die Tasche, sodass die wärmeleitende Masse zwischen das Fühlerelement und den Boden der Fühlertasche gedrückt wird; und
d) Befestigen des Fühleraufbaus am Heiz-/Belüftungssystem, um ihn in Bezug auf die Tasche in Position zu halten.

## Revendications

1. Ensemble de capteur ayant un élément de détection (1) prévu sur une extrémité d'un arbre extensible dans lequel l'arbre télescopique est un arbre télescopique comprenant un nombre de sections coaxiales (2, 3, 4, 5) qui peuvent coulisser les unes par rapport aux autres pour faire varier la longueur de l'arbre ;
un moyen de montage (10) prévu à l'autre extrémité de l'arbre extensible pour monter l'arbre ; des raccordements électriques (9) allant de l'élément de détection (1) sur la longueur de l'arbre jusqu'au moyen de montage (10) et fixé dans celui-ci ; et **caractérisé par**
la longueur de la section (2) comprenant l'élément de détection (1) étant plus long que les autres sections pouvant coulisser (3, 4, 5) ; et
une virole (20) positionnée de manière coulissante par-dessus l'extrémité de l'arbre, la virole (20) contenant un composé thermoconducteur visqueux (22) au-dessus de l'extrémité de l'arbre, en permettant ainsi à l'élément de détection couvert dans le composé thermoconducteur d'être poussé à travers la virole et d'être appuyé contre une paroi thermoconductrice externe.

2. Ensemble de capteur selon la revendication 1, dans lequel l'arbre comprend au moins quatre sections (2, 3, 4, 5).

3. Ensemble de capteur selon la revendication 1 dans lequel le composé thermoconducteur est un composé à base de silicone.

4. Système de chauffage/ventilation comprenant un trajet d'écoulement de fluide et une poche de détection s'étendant dans le trajet d'écoulement de fluide et comprenant un ensemble de capteur selon la revendication 1, l'arbre s'étendant dans la poche et le composé thermoconducteur (22) étant en contact avec la poche et l'élément de détection (1).

5. Système de chauffage/ventilation selon la revendication 4, dans lequel le système transporte un liquide et l'élément de détection (1) est un capteur de température.

6. Système de chauffage/ventilation selon la revendication 5, dans lequel le capteur est un thermistor.

7. Système de chauffage/ventilation selon la revendication 5 ou 6, dans lequel le capteur (1) a une largeur maximale inférieure à 6 mm.

8. Procédé de localisation d'un élément de détection dans un système de chauffage/ventilation ayant une poche de détection comprenant les étapes de
a) fourniture d'un ensemble de capteur selon l'une quelconque des revendications 1 à 3 ;
b) extension de l'arbre télescopique afin qu'il puisse atteindre l'extrémité de la poche ;
c) poussée de l'arbre télescopique dans la poche afin que le composé thermoconducteur soit appuyé entre l'élément de détection et le fond de la poche de détection ; et
d) fixation de l'ensemble de détection au système de chauffage/ventilation pour le maintenir en position par rapport à la poche.
